# EUROPÄISCHE PATENTSCHRIFT

(11) **EP 0 659 840 B1**
(45) Veröffentlichungstag und Bekanntmachung des Hinweises auf die Patenterteilung: **26.04.2000**
(21) Anmeldenummer: 94810720.6
(22) Anmeldetag: 13.12.1994
(51) Int. Cl.: C09B 67/08, C08K 9/10, C09B 67/00

(54) **Mit Zirkonium oder Titan-Phosphatkomplexen beschichtete organische Pigmente**
Organic pigments coated with zirconium or titanium phosphate complexes
Pigments organiques recouverts par des complexes de phosphate de zirconium ou de titane

(30) Priorität: 22.12.1993 CH 381993
(43) Veröffentlichungstag der Anmeldung: 28.06.1995
(73) Patentinhaber: Ciba Specialty Chemicals Holding Inc., 4057 Basel (CH)
(72) Erfinder: Chassot, Laurent, Dr., CH-1724 Praroman (CH); Bugnon, Philippe, Dr., CH-1724 Essert (CH)

(56) Entgegenhaltungen:
- EP-A- 0 296 111
- EP-A- 0 528 601
- FR-A- 1 253 937
- FR-A- 2 286 179
- US-A- 4 110 492

## Beschreibung

Die vorliegende Erfindung betrifft organische Pigmente, deren Teilchenoberfläche mit einem festhaftenden Überzug aus Zr- oder Ti-Phosphatkomplex versehen ist, sowie deren Herstellung und deren Verwendung. Sie zeichnen sich durch hervorragende Eigenschaften, insbesondere durch den hohen Glanz der damit erhaltenen Ausfärbungen, durch hohe Dispersionsbeständigkeit und durch ein sehr gutes rheologisches Verhalten der damit hergestellten Lackanreibungen oder Druckfarben aus.

Aus dem US-Patent 3,946,134 ist u.a. die Beschichtung von Pigmentteilchen mit Al-beziehungsweise Mg-Phosphatkomplex bekannt. Es wird dabei ausgeführt, dass dieser Überzug anorganischen und organischen Pigmenten eine bessere Beständigkeit gegen Chemikalien und eine bessere Wärme- und Lichtbeständigkeit verleiht.

Besonders hervorzuheben ist das Dokument EP-A-0 528 601, in welchem ein Verfahren zur Beschichtung der Teilchenoberfläche eines organischen Pigments mit einer hydrolisierten Verbindung eines Metalls der Gruppen IVA oder IVB offenbart wird. Danach kann auch der zusätzliche Schritt der "Crosslinking" (zum Beispiel durch Zusatz von Phosphorsäure) durchgeführt werden.

Es wurde nun gefunden, dass eine Beschichtung der Pigmentteilchen mit Zr-und/oder Ti-Phosphatkomplexen die Eigenschaften der Pigmente in überraschend höherem Masse verbessert, insbesondere bezüglich Glanz, Dispersionsbeständigkeit, Hitzebeständigkeit und rheologischen Verhaltens.

Die vorliegende Erfindung betrifft demnach Pigmentzusammensetzungen enthaltend ein organisches Pigment dessen Teilchenoberfläche mit einer Schutzüberzugsschicht versehen ist, dadurch gekennzeichnet, dass der Überzug aus einem Metallphosphatkomplex besteht, in dem das Metall aus der Gruppe Zirkonium, Titan und Mischungen davon ausgewählt wird, und der Überzug 0,5 bis 100 Gew.%, bevorzugt bis 40 Gew.%, insbesondere 5 bis 40 Gew.%, bezogen auf das Pigment, ausmacht. Die zweckmässigste Gewichtsmenge des Überzuges hängt insbesondere von der spezifischen Oberfläche des zu überziehenden Pigmentes ab.

Das Molverhältnis zwischen Zirkonium und/oder Titan und Phosphor liegt vorzugsweise zwischen 0,25 und 0,75, bevorzugt zwischen 0,45 und 0,55.

Die Schutzüberzugsschicht kann auch Fluorid- oder BF₄⁻-Ionen enthalten, wie dies auch aus dem US-Patent 3 946 134 bekannt ist.

Alle üblichen organischen Pigmente, wie beispielsweise Chinophthalone, Indanthrone, Flavanthrone, Pyranthrone, Dioxazine, Perinone, Thioindigo, Metallkomplexe und insbesondere Diketopyrrolopyrrole, Chinacridone, Perylene, Anthrachinone, Phthalocyanine, Azopigmente, Isoindoline und Isoindolinone, eignen sich zur Herstellung der erfindungsgemässen Pigmentzusammensetzungen. Bevorzugt werden die Chinacridone und insbesondere die Diketopyrrolopyrrole.

Die Erfindung betrifft auch ein Verfahren zum Aufbringen eines haftenden Überzuges aus einem Metallphosphatkomplex auf die Teilchenoberfläche eines organischen Pigments, bei dem als Metall Zirkonium und/oder Titan verwendet werden, dadurch gekennzeichnet, dass man
a) das Pigment mit einem Zr- und/oder Ti-Salz oder -Chelatkomplex in Wasser oder Niederalkylalkohol oder einem Gemisch davon nach üblichen Methoden dispergiert
   und
b) die wässrige Lösung der die Phosphationen liefernden Verbindung unter Rühren zugibt,
in solchen Mengen, dass 0,5 bis 100 Gew.% Metallphosphatkomplex, bezogen auf das Pigment, bei einem bevorzugten Molverhältnis von Metall zu Phosphor zwischen 0,25 und 0,75, entsteht,
oder das Pigment zuerst mit der die Phosphationen liefernden Verbindung dispergiert und dann die wässrige Lösung des Metallsalzes oder -Chelatkomplexes zugibt,
wobei sich das Zr- und/oder Ti-Phosphatkomplex in situ auf der Teilchenoberfläche des Pigments bildet und als Schutzschicht niederschlägt.

Vorzugsweise wird zuerst das Pigment mit dem Metallsalz oder -chelatkomplex dispergiert und dann die Lösung der die Phosphationen liefernden Verbindung zugegeben.

Geeignete Zr- beziehungsweise Ti-Salze oder Komplexe sind z.B. Zirkoniumsulfat, Zirkoniumammoniumcarbonat, Zirkoniumacetat, Zirkoniumpropionat, Zirkonylchlorid, Titan(IV)chlorid oder Titanylsulfat und insbesondere die Chelate der Formeln 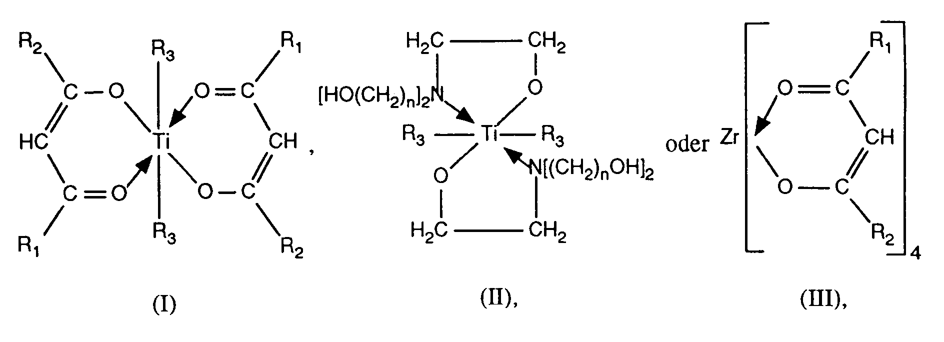 worin n eine Zahl von 1 bis 3, R1 Methyl, Ethyl, Methoxy oder Ethoxy, R₂ Methyl oder Ethyl und R₃ Halogen oder C₁-C₄-Alkoxy bedeuten, sowie Mischungen davon.

Halogen bedeutet z.B. Brom, Jod und insbesondere Chlor. C₁-C₄-Alkoxy bedeutet z.B. Methoxy, Ethoxy, n-Propoxy, Isopropoxy, n-Butoxy, sec.-Butoxy oder tert.-Butoxy.

Vorzugsweise wird eines der Chelate der Formeln I, II oder III verwendet, worin:
R₁ bevorzugt Methyl oder Ethoxy,
R₂ vorzugsweise Methyl,
n bevorzugt 2 und
R₃ bevorzugt C₁-C₄-Alkoxy, insbesondere Isopropoxy bedeuten.

Besonders bevorzugt sind Zirkonium- und Titanacetylacetonat sowie Titan(IV)triethanolaminat.

Geeignete Niederalkylalkohole sind z.B. Methyl-, Ethyl-, n-Propyl-, Isopropyl-, n-Butyl-, sec.-Butyl-, tert.-Butyl, oder Amylalkohol. Die Dispersion erfolgt aber vorzugsweise in Wasser, ohne einen Alkohol.

Die Phosphationen werden bevorzugt in Form von Ortho-, Meta- oder Pyrophosphorsäure oder ihrer Salze, insbesondere ihrer Alkalisalze, zugegeben.

Besonders geeignet sind z.B. Orthophosphorsäure, Orthophosphate, wie MH₂PO₄, M₂HPO₄ oder M₃PO₄, Metaphosphorsäure, Knorre Salz [(NaPO₃)₃·6H₂O], Grahamsches Salz [(NaPO₃)₆], Calgon [(NaPO₃)₁₂₋₁₃·Na₂O], M₂H₂P₂O₇ und M₄P₂O₇, wobei M Na, K oder NH₄ bedeutet. Bevorzugt werden Orthophosphate und insbesondere Na₂HPO₄ und Na₃PO₄.

Das Gemisch wird zweckmässig 15 Minuten bis 2 Stunden bei Temperaturen zwischen 20 und 80°C, bevorzugt bie Zimmertemperatur, gerührt.

Werden Fluorid- oder Fluoroborationen zugegeben, dann werden sie vorzugsweise in Form einer wässrigen Lösung der Suspension zugegeben. Es hat sich gezeigt, dass Ammoniumbifluorid (NH₄HF₂), Fluorwasserstoffsäure und Natriumfluorid für diesen Zweck besonders gut geeignet sind. Die Fluoridionen können zusammen oder nach der Zugabe des Metallkomplexbildners der Suspension zugesetzt werden. Wenn anstelle der Fluoridionen BF₄⁻-Ionen verwendet werden, werden diese vorzugsweise in Form des Ammoniumsalzes zugegeben.

Die erfindungsgemässen Pigmente können gegebenenfalls zusätzlich mit einer weiteren Schutzschicht versehen werden. Es kann sich dabei um eine Metalloxid-Schutzschicht, z.B. aus Silicium- und/ oder Aluminiumoxid, wie in US-Patent 4,880,472 beschrieben, um eine Schicht aus üblicherweise als Silane bezeichneten Alkylestern der Kieselsäure, wie die von der Fa. Dynamit Nobel vertriebenen ®DYNASYLAN-Produkte, oder um eine Schicht aus Acrylharzen. Bevorzugt sind Beschichtungen mit den im US-Patent 4,734,137 beschriebenen Aminoalkylacrylatharzen.

Ein weiterer Gegenstand der Erfindung sind daher Pigmentzusammensetzungen wie oben bereits beschrieben, welche zusätzlich durch eine Aminoalkylacrylatharz-Schicht, erhältlich durch Homopolymerisation eines Monomeren der Formel 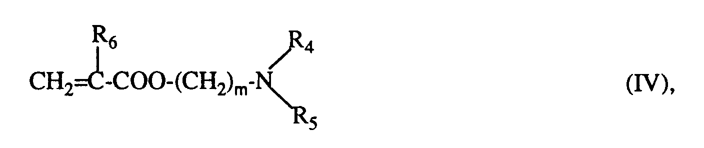 worin R₆ Wasserstoff oder Methyl und R₄ und R₅ unabhängig voneinander Wasserstoff, Methyl oder Ethyl bedeuten und m eine Zahl von 1 bis 6 ist, oder durch Copolymerisation des gleichen Monomeren mit einem mit letzterem copolymerisierbaren Monomeren, überzogen sind.

Diese zusätzliche Beschichtung kann nach üblichen Methoden, z.B. durch Aufschlämmung der erfindungsgemässen Pigmentzusammensetzung in Wasser und Zugabe des gewünschten Beschichtungsmittels in der gewünschten üblichen Menge unter Rühren, wie in den obenerwähnten Patentschriften beschrieben, erfolgen.

Die erfindungsgemässen Pigmentzusammensetzungen eignen sich sehr gut zum Pigmentieren von hochmolekularen organischen Materialien, insbesondere in Form von Lacken und Druckfarben. Hochmolekulare organische Materialien, die mit den erfindungsgemässen Stoffzusammensetzungen gefärbt beziehungsweise pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Je nach Verwendungszweck erweist es sich als vorteilhaft, die erfindungsgemässen Pigmentzusammensetzungen als Toner oder in Form von Präparaten einzusetzen. Bezogen auf das zu pigmentierende hochmolekulare organische Material kann man die erfindungsgemässen Pigmentzusammensetzungen in einer Menge von 0,01 bis 30 Gew.%, vorzugsweise von 0,1 bis 10 Gew.%, einsetzen.

Die Pigmentierung der hochmolekularen organichen Substanzen mit den erfindungsgemässen Stoffzusammensetzungen erfolgt beispielsweise derart, dass man eine solche Stoffzusammensetzung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Stoffzusammensetzungen in die Polymeren eingearbeitet werden. Es ist ferner möglich, zwecks Erzielung verschiedener Farbtöne den hochmolekularen, organischen Stoffen neben den erfindungsgemässen Stoffzusammensetzungen noch Füllstoffe beziehungsweise andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Pigmentzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen zeichnen sich durch gute allgemeine Eigenschaften, wie z.B. hohe Transparenz, gute Ueberlackier-, Migrations-, Hitze-, Licht- und Wetterbeständigkeit, aus.

Die erfindungsgemässen Pigmentzusammensetzungen zeichnen sich aber ganz besonders durch ein hervorragendes rheologisches Verhalten und hohe Dispersionsbeständigkeit in Lack- und Druckfarbensystemen sowie durch hohen Glanz und ausgezeichnetes "DOI" (= distinctness of image) der damit erhaltenen Lackierungen. In Industrielacken weisen die erfindungsgemässen Produkte eine ausgezeichnete Hitzebeständigkeit auf.

Infolge der guten rheologischen Eigenschaften der erfindungsgemässen Pigmentzusammensetzungen ist es möglich, Lacke hoher Pigmentkonzentration (high loadings) herzustellen.

In Kunststoffen zeichnen sich die erfindungsgemässen Produkte ebenfalls durch hohe Hitzebeständigkeit sowie durch weitgehende Verzugsfreiheit der damit pigmentierten Kunststoffteile aus.

Die erfindungsgemässen Pigmentzusammensetzungen eignen sich vorzugsweise zum Färben von wässrigen und/oder lösungsmittelhaltigen Lacken, insbesondere Automobillacken. Ganz besonders bevorzugt ist ihre Verwendung für Metalleffektlackierungen.

Die nachfolgenden Beispiele dienen zur Erläuterung der Erfindung. Sofern nichts anderes vermerkt, bedeuten Prozente Gewichtsprozente.

### Beispiel 1:

63,5 g eines 31,5 %igen wässrigen Presskuchens vom Diketopyrrolopyrrol der Formel 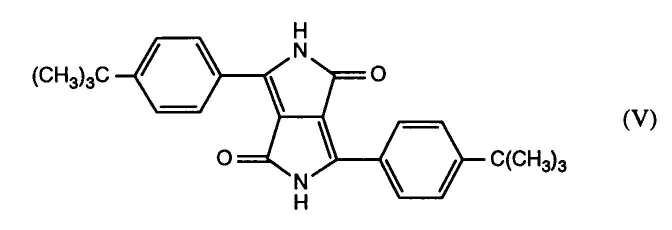 (hergestellt z.B. gemäss US 4,579,949) werden mit 4,8 g Zirkonium(IV)acetylacetonat in 132 ml Wasser dispergiert. Dieser Suspension wird mittels einer Pumpe innert 2½ Stunden unter Rühren eine Lösung von 7,05 g Na₂HPO₄·12H₂O in 70 ml Wasser zugefügt. Danach wird die Suspension filtriert und der Rückstand wird mit Wasser gewaschen, bei 80°C getrocknet und pulverisiert.

### Beispiel 2:

Beispiel 1 wird wiederholt mit der einzigen Ausnahme, dass anstelle des Diketopyrrolopyrrols der Formel V die gleiche Menge des Diketopyrrolopyrrols der Formel 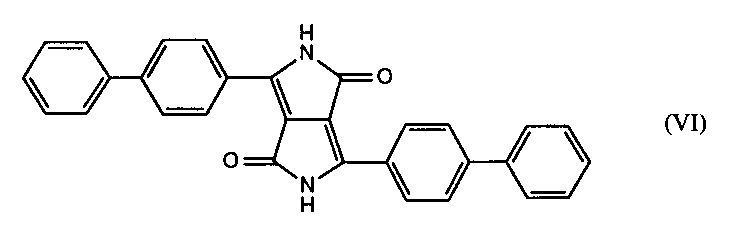 verwendet wird (hergestellt z.B. gemäss US 4,579,949).

### Beispiel 3:

27,2 g eines 36,8 %igen Presskuchens vom Diketopyrrolopyrrol der Formel VI (vgl. Beispiel 2) werden mit 2,57 g Titan(IV)triethanolaminat der Formel 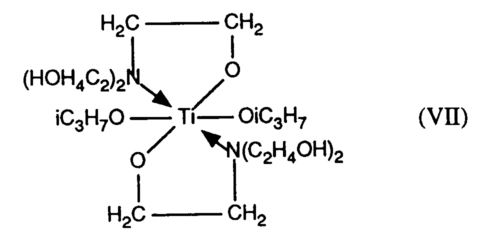 (Dynamit Nobel, 80 %ige Lösung in Isopropanol) in 70 ml Wasser dispergiert. Dieser Suspension wird langsam während ca. einer Stunde unter Rühren eine Lösung von 3 g Na₂HPO₄·12H₂O in 40 ml Wasser zugegeben. Danach wird die Suspension filtriert und der Rückstand wird mit Wasser gewaschen, bei 80°C getrocknet und pulverisiert.

### Beispiel 4:

Beispiel 3 wird wiederholt mit der Ausnahme, dass anstelle des Titantriethanolaminats 1,26 g Zr(SO₄)₂·4H₂O und anstatt 3 g nur 2,53 g Na₂HPO₄·12H₂O eingesetzt werden.

### Beispiel 5:

2 g des gemäss Beispiel 1 erhaltenen Produktes und 48 g Einbrennlack bestehend aus

| | |
|---|---|
| 56 g | Alkydharz ALKYDAL® F310 (Bayer AG; 60 %ig in Xylol) |
| 13 g | Melaminharz CYMEL® 327 (Cyanamid; 90%ig in Butanol) |
| 25 g | Xylol |
| 25 g | Butanol |
| 2,5 g | 1-Methoxy-2-Propanol und |
| 1 g | Silikonöl (1 %ig in Xylol) |

werden nach üblichen Methoden vermischt. Die Applikation des erhaltenen Farblackes erfolgt durch Ablauf auf Glasplatte. Vor dem Einbrennen im Umluftrockenschrank (30 Minuten bei 120°C) lässt man ca. 30 Minuten bei 25° Neigung abluften.

Die Glanzwerte werden mit einem Glanzmesser (Zehntner ZGM 1020®) in 20° Neigung gemäss DIN 67 530 gemessen.

Die so erhaltene Lackierung ergibt im Vergleich zu einer Lackierung mit einem unbeschichteten Pigment einen ganz erstaunlich besseren Glanz.

Beim jeweiligen Ersatz des Produktes von Beispiel 1 mit den Produkten der Beispiele 2-4 erhält man etwa gleichwertige Resultate mit einer ganz überraschenden Verbesserung des Glanzes gegenüber Lackierungen mit unbeschichtetem Pigment.

### Beispiel 6:

128,5 g eines 15,56%igen Presskuchens 2,9-Dimethylchinacridon der Formel 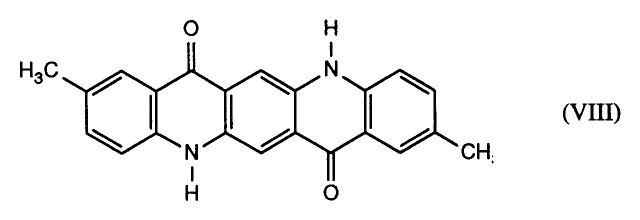 und 4,8 g Zirkonium(IV)acetylacetonat werden in 366,7 g Wasser dispergiert. Innert 50 Minuten wird unter Rühren eine Lösung von 7,08 g Na₂HPO₄·12 H₂O in 50 ml Wasser zugefügt. Die Suspension wird mit verdünnter Essigsäure auf pH = 5 gestellt, eine Stunde weitergerührt und dann abfiltriert. Der Rückstand wird mit Wasser gewaschen, bei 80°C getrocknet und pulverisiert.

### Beispiel 7:

27,2 g eines 36,8%igen Presskuchens Diketopyrrolopyrrol C.I. Pigment Red 255 und 1,02 g Zirkonium(IV)acetylacetonat werden in 72 g Wasser während 4 Stunden dispergiert. Innert 40 Minuten wird unter Rühren eine Lösung von 1,3 g NaH₂PO₄·2 H₂O in 20 ml Wasser zugefügt. Die Suspension wird eine Stunde weitergerührt und dann abfiltriert. Der Rückstand wird mit Wasser gewaschen, getrocknet und pulverisiert.

### Beispiel 8:

27,06 g eines 36,96%igen Presskuchens Isoindolinone C.I. Pigment Yellow 110 und 2,24 g Zirkonium(IV)acetylacetonat werden in 71 g Wasser während 4 Stunden dispergiert. Innert 40 Minuten wird unter Rühren eine Lösung von 3,3 g Na₂HPO₄·12 H₂O in 40 ml Wasser zugefügt. Die Suspension wird mit verdünnter Essigsäure auf pH = 5 gestellt, eine Stunde weitergerührt und dann abfiltriert. Der Rückstand wird mit Wasser gewaschen, getrocknet und pulverisiert.

### Beispiel 9:

Man verfährt analog wie im Beispiel 1, jedoch ausgehend von 1,4-Diketo-3,6-diphenyl-pyrrolo[3,4-c]pyrrol der Formel

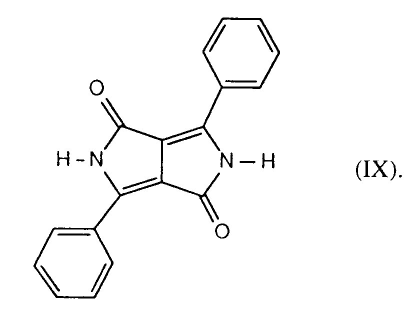

### Beispiele 10-13:

Man verfährt analog wie im Beispiel 9, jedoch ausgehend von folglichen Metallsalzen beziehungsweise -chelatkomplexen:

| Beispiel | Metallsalz bzw. -chelatkomplex |
|---|---|
| 10 | Titan(IV)-triethanolaminat |
| 11 | Zr(SO₄)₂ |
| 12 | Ti(O)SO₄ |
| 13 | Zirkonium(IV)-acetat |

### Beispiele 14-21:

Man verfährt analog wie im Beispiel 5, jedoch ausgehend von den Produkten gemäss Beispielen 6-13 anstelle des Produktes gemäss Beispiel 1. Die erhaltenen Lackierungen ergeben ganz überraschende Verbesserungen des Glanzes gegenüber Lackierungen mit unbeschichteten Pigmenten.

### Ca4B-Presskuchen:

74,8 g 2-Amino-5-methylbenzolsulfonsäure werden in 580 ml Wasser dispergiert. Dann werden 34,9 g 47%ige wässrige Natriumhydroxid-Lösung zugefügt; das Gemisch wird bei 40°C bis zur vollständigen Lösung gerührt, dann auf 0°C durch Zusatz von Eis abgekühlt. Eine Lösung von 27,6 g Natriumnitrit in 50 ml Wasser wird zugefügt, gefolgt von 90,0 g 36%iger, wässriger Salzsäure. Die diazotierte Suspension wird 28 Minuten bei einer Temperatur von 0°C gerührt.

75,2 g 2-Hydroxy-3-naphthoesäure werden bei 40°C in 1300 ml Wasser und 42,6 g 47%ige wässrige Natriumhydroxid-Lösung gelöst. Die Kupplerlösung wird auf 5°C durch Zusatz von Eis abgekühlt.

Die diazotierte Suspension wird dann zur Kupplerlösung während 30 Minuten unter Rühren zudosiert. Der pH-Wert wird anfänglich bis auf pH 10,6-10,8 sinken gelassen, dann bei diesem Wert durch Zugabe verdünnter wässriger Natriumhydroxid-Lösung gehalten. 126,8 g festes Calciumchlorid werden der erhaltenen Suspension zugefügt, die 75 Minuten bei 5-8°C weitergerührt wird. Dann wird innerhalb 15 Minuten auf 70°C erhitzt und abfiltriert. Der erhaltene Ca4B Presskuchen wird mit Wasser salzfrei gewaschen.

### Beispiel 22:

119,8 g eines 20,9%igen Ca4B Presskuchen werden in 258,2 g Wasser unter schnellem Rühren während 2 Stunden dispergiert. Nach Zugabe von 6,88 g Zirconium(IV)acetylacetonat wird das Gemisch während 7 Stunden schnell gerührt, dann wird eine Lösung von 10,1 g Na₂HPO₄·12 H₂O in 19 ml Wasser während 2¼ Stunden bei Raumtemperatur zugefügt. Die Suspension wird abfiltriert; der Rückstand wird mit Wasser gewaschen und über Nacht bei 70°C getrocknet, dann bei 90°C während 4 Stunden geröstet.

### Beispiel 23:

6,21 g des gemäss Beispiel 22 erhaltenen Produktes und 50,0 g einer unpigmentierten Toluol-Phenolharz Tiefdruck-Tinte (enthaltend 2,05 g Harz) werden 16 Stunden in einer Kugelmühle dispergiert. Die erhaltene Tinte wird im Tiefdruckverfahren in üblicher Weise gedruckt.

Die Dispersionsqualität der Tinte sowie die Transparenz und der Glanz der so erhaltenen Drücke sind erstaunlich besser als die entsprechenden Eigenschaften, welche mit einem unbeschichteten Pigment erreicht werden.

## Patentansprüche

1. Pigmentzusammensetzungen enthaltend ein organisches Pigment dessen Teilchenoberfläche mit einer Schutzüberzugsschicht versehen ist, dadurch gekennzeichnet, dass der Überzug aus einem Metallphosphatkomplex besteht, in dem das Metall aus der Gruppe Zirkonium, Titan und Mischungen davon ausgewählt wird, und der Überzug 0,5 bis 100 Gew.%, bevorzugt 5 bis 40 Gew.%, bezogen auf das Pigment, ausmacht.

2. Pigmentzusammensetzungen gemäss Anspruch 1, dadurch gekennzeichnet, dass als Pigment ein Pigment aus der Diketopyrrolopyrrol-, Chinacridon-, Perylen-, Anthrachinon-, Phthalocyanin-, Azo-, Isoindolin- oder Isoindolinonreihe enthalten ist.

3. Pigmentzusammensetzungen gemäss Anspruch 1, dadurch gekennzeichnet, dass als Pigment ein Pigment aus der Diketopyrrolopyrrol- oder Chinacridonreihe enthalten ist.

4. Pigmentzusammensetzungen gemäss Anspruch 1, welche zusätzlich durch eine Aminoalkylacrylatharz-Schicht, erhältlich durch Homopolymerisation eines Monomeren der Formel 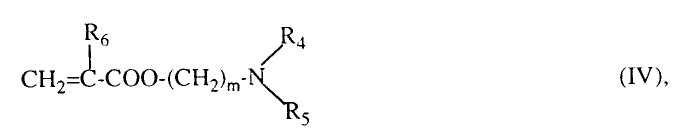 worin R₆ Wasserstoff oder Methyl und R₄ und R₅ unabhängig voneinander Wasserstoff, Methyl oder Ethyl bedeuten und m eine Zahl von 1 bis 6 ist, oder durch Copolymerisation des gleichen Monomeren mit einem mit letzterem copolymerisierbaren Monomeren, überzogen sind.

5. Verfahren zum Aufbringen eines haftenden Überzuges aus einem Metallphosphatkomplex auf die Teilchenoberfläche eines organischen Pigments, bei dem als Metall Zirkonium und/oder Titan verwendet werden, dadurch gekennzeichnet, dass man
a) das Pigment mit einem Zr- und/oder Ti-Salz oder -Chelatkomplex in Wasser oder Niederalkylalkohol oder einem Gemisch davon nach üblichen Methoden dispergiert
und
b) die wässrige Lösung der die Phosphationen liefernden Verbindung unter Rühren zugibt,
in solchen Mengen, dass 0,5 bis 100Gew.% Metallphosphatkomplex, bezogen auf das Pigment, bei einem bevorzugten Molverhältnis von Metall zu Phosphor zwischen 0,25 und 0,75, entsteht,
oder das Pigment zuerst mit der die Phosphationen liefernden Verbindung dispergiert und dann die wässrige Lösung des Metallsalzes oder -Chelatkomplexes zugibt,
wobei sich das Zr- und/oder Ti-Phosphatkomplex in situ bei Temperaturen zwischen 20 und 80°C, bevorzugt bie Zimmertemperatur, auf der Teilchenoberfläche des Pigments bildet und als Schutzschicht niederschlägt.

6. Verfahren gemäss Anspruch 5, dadurch gekennzeichnet, dass 5 bis 40Gew.% Metallphosphatkomplex, bezogen auf das Pigment, entsteht.

7. Verfahren gemäss Anspruch 5, dadurch gekennzeichnet, dass zuerst das Pigment mit dem Metallsalz oder -chelatkomplex dispergiert und dann die Lösung der die Phosphationen liefernden Verbindung zugegeben wird.

8. Verfahren gemäss Anspruch 5, dadurch gekennzeichnet, dass ein Zr- oder Ti-Salz oder Komplex ausgewählt aus Zirkoniumsulfat, Zirkoniumammoniumcarbonat, Zirkoniumacetat, Zirkoniumpropionat, Zirkonylchlorid, Titanchlorid oder Titanylsulfat oder aus Chelaten der Formeln 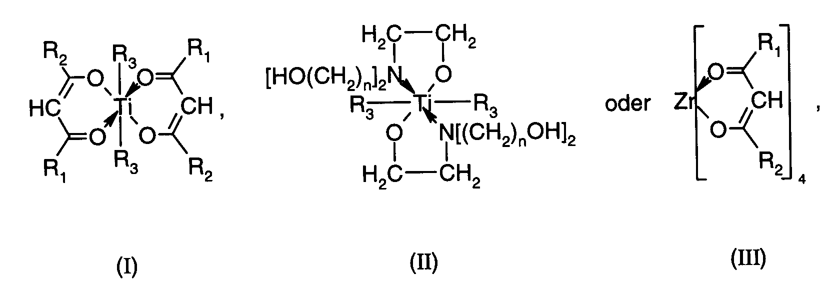 worin n eine Zahl von 1 bis 3, R₁ Methyl, Ethyl, Methoxy oder Ethoxy, R₂ Methyl oder Ethyl und R₃ Halogen oder C₁-C₄-Alkoxy bedeuten, oder Mischungen davon verwendet werden.

9. Verfahren gemäss Anspruch 8, dadurch gekennzeichnet, dass eines der Chelaten der Formeln I, II oder III, worin R₁ Methyl oder Ethoxy, R₂ Methyl, n die Zahl 2 und R₃ C₁-C₄-Alkoxy bedeuten, verwendet wird.

10. Verfahren gemäss Anspruch 5, dadurch gekennzeichnet, dass als Phosphationen liefernde Verbindung eine Verbindung ausgewählt aus Orthophosphorsäure, MH₂PO₄, M₂HPO₄, M₃PO₄, Metaphosphorsäure, Knorre Salz, Grahamsches Salz, Calgon, M₂H₂P₂O₇ und M₄P₂O₇ wobei M Na, K oder NH₄ bedeutet, verwendet wird.

11. Verfahren gemäss Anspruch 10, dadurch gekennzeichnet, dass ein Orthophosphat verwendet wird.

12. Verfahren gemäss Anspruch 5, dadurch gekennzeichnet, dass die Dispersion in Wasser erfolgt.

13. Verfahren gemäss Anspruch 5, dadurch gekennzeichnet, dass zusätzlich auch Fluorid-oder Fluoroborationen zugegeben werden.

14. Hochmolekulares organisches Material enthaltend eine Pigmentzusammensetzung gemäss Anspruch 1.

15. Hochmolekulares organisches Material gemäss Anspruch 14, dadurch gekennzeichnet, dass es sich um einen Lack oder eine Druckfarbe handelt.

16. Hochmolekulares organisches Material gemäss Anspruch 15, dadurch gekennzeichnet, dass es sich um ein Automobillack handelt.

## Claims

1. A pigment composition comprising an organic pigment whose particle surface is provided with a layer of a protective coating, which coating consists of a metal phosphate complex in which the metal is selected from the group consisting of zirconium, titanium and mixtures thereof, and the amount of said coating is from 0.5 to 100% by weight, preferably from 5 to 40% by weight, based on the pigment.

2. A pigment composition according to claim 1, wherein the pigment is a pigment of the diketopyrrolopyrrole, quinacridone, perylene, anthraquinone, phthalocyanine, azo, isoindoline or isoindolinone series.

3. A pigment composition according to claim 1, wherein the pigment is a pigment of the diketopyrrolopyrrole or quinacridone series.

4. A pigment composition according to claim 1, which is additionally coated with a layer of an aminoalkyl acrylate resin obtainable by homopolymerization of a monomer of formula 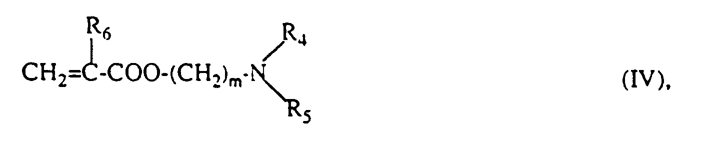 wherein R₆ is hydrogen or methyl and R₄ and R₅ are each independently of the other hydrogen, methyl or ethyl and m is an integer from 1 to 6, or by copolymerization of the same monomer with a monomer which is copolymerizable with said same monomer.

5. A process for applying an adhesive coating of a metal phosphate complex to the particle surface of an organic pigment, using as said metal zirconium and/or titanium, which comprises
a) dispersing the pigment with a Zr and/or Ti salt or chelate complex in water or a lower alkyl alcohol, or a mixture thereof, by conventional methods,
and
b) adding the aqueous solution of the compound supplying the phosphate ions, with stirring,
in such amounts that from 0.5 to 100% by weight of metal phosphate complex is formed, based on the pigment, at a preferred molar ratio of metal to phosphorus of between 0.25 and 0.75,
or dispersing the pigment first with the compound supplying the phosphate ions and then adding the aqueous solution of the metal salt or metal chelate complex,
such that the Zr and/or Ti phosphate complex forms *in situ* at temperatures between 20 and 80°C, preferably at room temperature, on the particle surface of the pigment and precipitates as a protective layer.

6. A process according to claim 5, wherein from 5 to 40% by weight of metal phosphate complex is formed, based on the pigment.

7. A process according to claim 5, which comprises first dispersing the pigment with the metal salt or metal chelate complex and then adding the solution of the compound supplying the phosphate ions.

8. A process according to claim 5, which comprises using a Zr or Ti salt or a complex selected from zirconium sulfate, zirconium ammonium carbonate, zirconium acetate, zirconium propionate, zirconyl chloride, titanium chloride or titanyl sulfate or from chelates of formulae 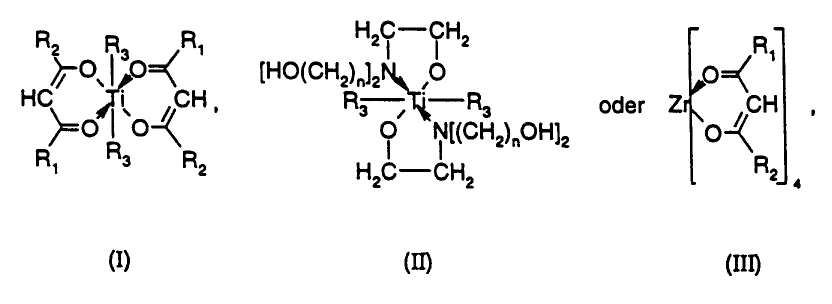 wherein n is a number from 1 to 3, R₁ is methyl, ethyl, methoxy or ethoxy, R₂ is methyl or ethyl and R₃ is halogen or C₁-C₄alkoxy, or a mixture thereof.

9. A process according to claim 8, which comprises the use of a chelate of formula I, II or III wherein R₁ is methyl or ethoxy, R₂ is methyl, n is 2, and R₃ is C₁-C₄alkoxy.

10. A process according to claim 5, wherein the compound supplying phosphate ions is a compound selected from orthophosphoric acid, MH₂PO₄, M₂HPO₄, M₃PO₄, metaphosphoric acid, Knorre salt, Graham's salt, Calgon, M₂H₂P₂O₇ and M₄P₂O₇, wherein M is Na, K or NH₄.

11. A process according to claim 10, wherein an orthophosphate is used.

12. A process according to claim 5, wherein dispersion is carried out in water.

13. A process according to claim 5, wherein fluoride or fluoroborate ions are additionally added.

14. An organic material of high molecular weight comprising a pigment composition according to claim 1.

15. An organic material of high molecular weight according to claim 14, which is a paint or a printing ink.

16. An organic material of high molecular weight according to claim 15, which is an automotive paint.

## Revendications

1. Compositions de pigments contenant un pigment organique dont la surface des particules est munie d'une couche d'un revêtement protecteur, caractérisées en ce que le revêtement est constitué d'un complexe de phosphate métallique dans lequel le métal est choisi dans le groupe du zirconium, du titane et de leurs mélanges, et le revêtement représente 0,5 à 100 % en masse, de préférence 5 à 40 % en masse, par rapport au pigment.

2. Compositions de pigments selon la revendication 1, caractérisées en ce qu'elles contiennent comme pigment un pigment de la série des dicétopyrrolopyrroles, des quinacridones, des pérylènes, des anthraquinones, des phtalocyanines, des pigments azoïques, des isoindolines ou des isoindolinones.

3. Compositions de pigments selon la revendication 1, caractérisées en ce qu'elles contiennent comme pigment un pigment de la série des dicétopyrrolopyrroles ou des quinacridones.

4. Compositions de pigments selon la revendication 1, qui sont revêtues en outre d'une couche de résine acrylate d'aminoalkyle, pouvant être obtenue par homopolymérisation d'un monomère de formule 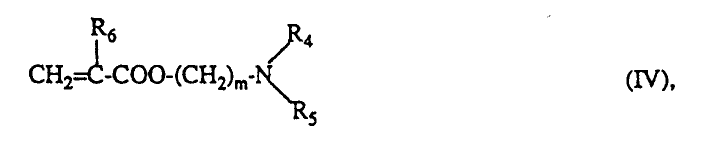 dans laquelle R₆ représente un atome d'hydrogène ou un reste méthyle et R₄ et R₅ sont, indépendamment l'un de l'autre, un atome d'hydrogène ou un reste méthyle ou éthyle, et m est un nombre de 1 à 6, ou par copolymérisation du même monomère avec un monomère copolymérisable avec lui.

5. Procédé d'application d'un revêtement adhérent constitué d'un complexe de phosphate métallique sur la surface des particules d'un pigment organique, dans lequel on utilise comme métal du zirconium et/ou du titane, caractérisé en ce que
a) on disperse par des procédés classiques le pigment et un sel ou complexe de type chélate de Zr et/ou de Ti dans de l'eau ou un alcanol inférieur ou dans un de leurs mélanges, et
b) on ajoute en agitant la solution aqueuse du composé donnant les ions phosphates,
en des quantités telles qu'il se forme 0,5 à 100 % en masse de complexe de phosphate métallique par rapport au pigment, avec un rapport molaire préféré du métal au phosphore compris entre 0,25 et 0,75,
ou on disperse d'abord le pigment avec le composé donnant des ions phosphate, puis on ajoute la solution aqueuse du sel ou du complexe chélate métallique,
grâce à quoi le complexe de phosphate de Zr et/ou de Ti se forme *in situ* à des températures comprises entre 20 et 80°C, de préférence à la température ambiante, sur la surface des particules du pigment et précipite sous forme d'une couche protectrice.

6. Procédé selon la revendication 5, caractérisé en ce qu'il se forme 5 à 40 % en masse de complexe de phosphate métallique par rapport au pigment.

7. Procédé selon la revendication 5, caractérisé en ce que l'on disperse d'abord le pigment avec le sel ou le complexe chélate métallique, puis on ajoute la solution du composé donnant les ions phosphate.

8. Procédé selon la revendication 5, caractérisé en ce que l'on utilise un sel ou complexe de Zr ou Ti choisi parmi le sulfate de zirconium, le carbonate de zirconium et d'ammonium, l'acétate de zirconium, le propionate de zirconium, le chlorure de zirconyle, le chlorure de titane ou le sulfate de titanyle, ou parmi les chélates de formule 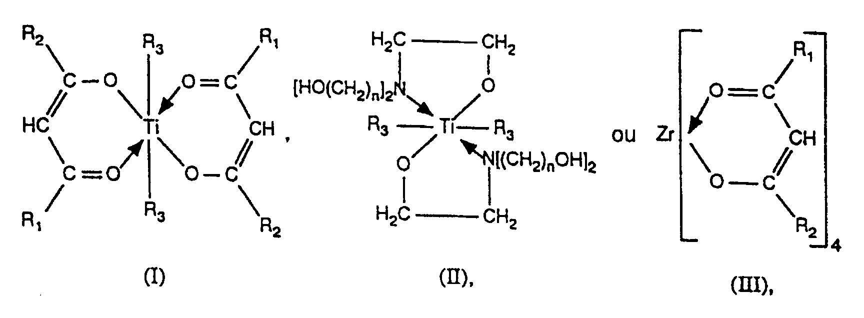 dans lesquels n est un nombre de 1 à 3, R₁ est un reste méthyle, éthyle, méthoxy ou éthoxy, R₂ est un reste méthyle ou éthyle et R₃ est un halogène ou un reste alcoxy en C₁-C₄, ou leurs mélanges.

9. Procédé selon la revendication 8, caractérisé en ce que l'on utilise un des chélates de formule I, II ou III, dans lequel R₁ est un reste méthyle ou éthoxy, R₂ est un reste méthyle, n est égal à 2 et R₃ est un reste alcoxy en C₁-C₄.

10. Procédé selon la revendication 5, caractérisé en ce que l'on utilise comme composé donnant des ions phosphate un composé choisi parmi l'acide orthophosphorique, MH₂PO₄, M₂HPO₄, M₃PO₄, l'acide métaphosphorique, le sel de Knorre, le sel de Graham, le Calgon, M₂H₂P₂O₇ et M₄P₂O₇, où M représente Na, K ou NH₄.

11. Procédé selon la revendication 10, caractérisé en ce que l'on utilise un orthophosphate.

12. Procédé selon la revendication 5, caractérisé en ce que la dispersion s'effectue dans l'eau.

13. Procédé selon la revendication 5, caractérisé en ce que l'on ajoute en plus des ions fluorures ou fluoroborate.

14. Matériau organique de masse molaire élevée contenant une composition de pigment selon la revendication 1.

15. Matériau organique de masse molaire élevée selon la revendication 14, caractérisé en ce qu'il s'agit d'une laque ou d'une encre d'imprimerie.

16. Matériau organique de masse molaire élevée selon la revendication 15, caractérisé en ce qu'il s'agit d'une laque pour automobile.
